## Europäisches Patentamt
## European Patent Office
## Office européen des brevets

(19)

(11) Veröffentlichungsnummer: **0 175 236**
**B1**

(12) **EUROPÄISCHE PATENTSCHRIFT**

(45) Veröffentlichungstag der Patentschrift:
21.02.90

(51) Int. Cl.⁵: **H 02 G 3/06,** H 01 R 13/595,
H 01 R 13/52

(21) Anmeldenummer: 85111283.9

(22) Anmeldetag: 06.09.85

(54) Vorrichtung zur Einführung eines Flachkabels.

(30) Priorität: 19.09.84 DE 8427559 U
20.04.85 DE 8511822 U

(43) Veröffentlichungstag der Anmeldung:
26.03.86 Patentblatt 86/13

(45) Bekanntmachung des Hinweises auf die Patenterteilung:
21.02.90 Patentblatt 90/8

(84) Benannte Vertragsstaaten:
AT BE CH DE FR GB IT LI NL SE

(56) Entgegenhaltungen:
DE-U- 7 124 862
DE-U- 8 135 327
DE-U- 8 332 294
GB-A- 1 209 445
GB-A- 2 102 637

(73) Patentinhaber: HARTING ELEKTRONIK GmbH,
Marienwerderstrasse 3 Postfach 1140,
D-4992 Espelkamp (DE)

(72) Erfinder: Harting, Dietmar, Schweriner Strasse 31,
D-4992 Espelkamp (DE)
Erfinder: Nagel, Hans, Dipl.-Ing., Untkenbeeke 1,
D-4952 Porta Westfalica (DE)
Erfinder: Piewitt, Günter, Glockenturmstrasse 8,
D-4990 Lübbecke 3 (DE)

ACTORUM AG

**Beschreibung**

Die Erfindung betrifft eine Vorrichtung zur Einführung eines Flachkabels für Wanddurchbrüche, Gehäusewände etc. insbesondere für Steckverbinder-Gehäuse, wobei das Flachkabel durch Befestigungs- bzw. Halterungsteile gefädelt ist, die mit dem Kabelquerschnitt entsprechenden Durchgangsöffnungen versehen sind und wobei eine elastische Dichtung zwischen den Befestigungsteilen vorgesehen ist, die beim Verschrauben dieser Teile gegen das Flachkabel gedrückt ist.

Kabeleinführungen müssen ausreichend gegen Zugbeanspruchungen am Kabel gesichert sein, um zu verhindern, daß das Kabel ggfs. aus dem Gehäuse bzw. der Kabeleinführungs-Einrichtung herausgezogen wird und unzulässige Zugbeanspruchungen an den Leiteranschlußstellen auftreten. Daneben muß auch sichergestellt sein, daß Biegebeanspruchungen nicht zu Beschädigungen am Kabel führen.·

Kabeleinführungen mit Zugentlastungseinrichtung für runde Kabel sind allgemein bekannt. Dabei wird das Kabel unter Verwendung eines ringförmigen, elastischen Dicht- bzw. Klemmelementes mittels einer sog. Stopfbuchsenverschraubung in einer runden Durchgangsöffnung befestigt. Durch ein schraubbares Teil wird dabei das Dichtelement zusammengepreßt, wobei dessen Innendurchmesser verkleinert und dieses fest gegen den Kabelmantel des hindurchgeführten Kabels gepreßt wird. Dabei wird zum einen ein fester Halt des Kabels in der Kabeleinführung und zum anderen auch eine Abdichtung gegen äußere Einflüsse, wie Staub und Feuchtigkeit erzielt. Derartige Stopfbuchsenverschraubungen sind jedoch für Flachkabel aufgrund deren geometrischer Abmessungen ungeeignet.

Aus der DE-U 8 135 327 ist eine Kabelverschraubung für Flachkabel bekannt, bei der das Flachkabel durch mit entsprechenden Durchgangsöffnungen versehene Formteile gefädelt ist und wobei zwischen den Formteilen eine Dichtung (O-Ring) vorgesehen ist. Beim Zusammenschrauben der Formteile wird die Dichtung zusammengedrückt und gegen das Flachkabel gepreßt. Neben der Abdichtung der Kabeleinführung wird dadurch auch eine gewisse Zugentlastung des eingeklemmten Flachkabels erzielt. Jedoch kann die damit erreichte Zugentlastung nicht als ausreichend angesehen werden, wenn hohe Zugkräfte am Kabel angreifen, insbesondere müssen bei auch nur geringfügig unterschiedlichen Kabelquerschnitten stets unterschiedliche, d.h. entsprechend angepaßte Formteile vorgesehen werden.

Der Erfindung liegt daher die Aufgabe zugrunde, eine Kabeleinführung für Flachkabel zu schaffen, die zwar weitgehend den Abmessungen des Flachkabels (Breite/Dicke) angepaßt ist, jedoch auch die Verwendung von Flachkabeln mit unterschiedlichen Abmessungen ermöglicht, die dabei einen ausreichenden Schutz gegen das Eindringen von Fremdkörpern bietet, und bei der eine einwandfreie Sicherung des Kabels in bezug auf hohe Zugbeanspruchungen des Kabels nicht zu Beschädigungen des eingeführten Kabels führen.

Diese Aufgabe wird erfindungsgemäß dadurch gelöst, daß ein rahmenförmiges, im wesentlichen rechteckförmiges Halterungsteil vorgesehen ist, das an zwei gegenüberliegenden Seiten mit Pfosten versehen ist,

daß im Bodenbereich des Halterungsteiles eine Öffnung als Kabeldurchgang vorgesehen ist,

daß im Halterungsteil eine Einformung mit randseitigen Auflageschultern für eine einfügbare, elastische Dichtung ausgebildet ist, wobei die Dichtung mit einer, der Querschnittsform des Flachkabels entsprechenden Durchgangsöffnung versehen ist, und

daß Zugentlastungsbügel mit den Pfosten des Halterungsteiles verschraubbar sind, wobei das Flachkabel zwischen den Zugentlastungsbügeln klemmend gehalten ist.

Weitere vorteilhafte Ausgestaltungen der Erfindung sind in den Ansprüchen 2 bis 9 angegeben.

Die mit der Erfindung erzielten Vorteile bestehen insbesondere darin, daß eine Flachkabeleinführung mit Zugentlastung und gleichzeitiger Abdichtung geschaffen wurde, die weitgehend der Querschnittsform des Flachkabels angepaßt ist und eine minimale Ausdehnung in Querrichtung des Flachkabelquerschnittes aufweist. Die Kabeleinführung ist dabei besonders vorteilhaft an schmalen, rechteckigen Steckverbinder-Gehäusen bzw. Gehäusen allgemein einsetzbar.

Insbesondere kann eine solche Kabeleinführung an Leitungseinführungen/Kabelanschlüssen ortsveränderlicher Geräte wie z.B. Laufkatzen oder dergl., bei denen betriebsmäßig laufend Verschiebebewegungen auftreten, verwendet werden.

Die Ausführung nach Anspruch 8 oder 9 ermöglicht es, daß in eine Vorrichtung zur Kabeleinführung nicht nur einziges, sondern auch mehrere, parallel geführte, «aufeinandergepackte» Flachkabel eingeführt werden können.

Die Ausführung nach Anspruch 9 ist von besonderem Vorteil im Hinblick auf Herstellungs- und Lagerhaltungskosten, da für alle vorkommenden Kabelanordnungen bzw. -Anzahlen eine einheitliche Kabeleinführung Verwendung finden kann, die mit einer entsprechend groß bemessenen Kabel-Durchgangsöffnung versehen ist. Die Anpassung an die jeweils verwendete Kabelkonfiguration kann dabei mittels unterschiedlich ausgebildeten, preisgünstigen Dichtungen in Verbindung mit Druck-Scheiben erfolgen.

Mehrere Ausführungsbeispiele der Erfindung sind in der Zeichnung dargestellt und werden im folgenden näher erläutert.

Es zeigen:

Fig. 1 die Ansicht einer Flachkabeleinführung an einem Steckverbinder-Gehäuse, als gesondertes Bauteil,

Fig. 2 einen Schnitt der Flachkabeleinführung gem. Fig. 1 entlang der Linie 2 - 2,

Fig. 3A, 3B die Ansichten eines Steckverbinder-Gehäuses vor Anbringung der Flachkabeleinführung,

Fig. 4A, 4B, 4C, 4D die Ansichten eines rahmenförmigen Halterungsteiles,

Fig. 5A, 5B die Ansichten einer Dichtung,

Fig. 6A, 6B, 6C die Ansichten einer Druckplatte,

Fig. 7A, 7B, 7C die Ansichten des einen Zugentlastungs-Bügels,

Fig. 8A, 8B, 8C die Ansichten des anderen Zugentlastungs-Bügels,

Fig. 9 einen Schnitt eines Steckverbinder-Gehäuses mit einstückig angeformtem Halterungsteil,

Fig. 10 die Seitenansicht zu Fig. 9,

Fig. 11 die Draufsicht zu Fig. 9,

Fig. 12 die Ansicht einer fertig montierten Flachkabeleinführung bei einem Steckverbinder-Gehäuse gem. Fig. 9 - 11,

Fig. 13 einen Schnitt der Flachkabeleinführung entlang Linie 13 - 13 in Fig. 12,

Fig. 13A einen Schnitt wie Fig. 13 für eine Flachkabeleinführung mit drei Flachkabeln,

Fig. 14A, 14B die Ansichten einer Dichtung,

Fig. 15A, 15B die Ansichten einer Druck-Scheibe, und

Fig. 16A, 16B, 16C die Ansichten einer Druckplatte.

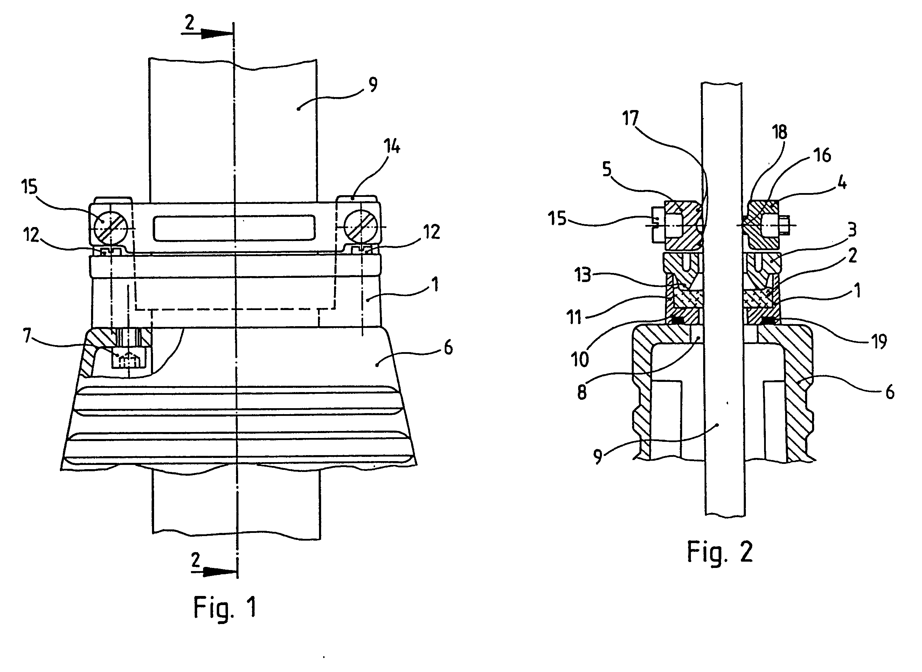

Die in den Fig. 1 und 2 dargestellte Flachkabeleinführung mit Zugentlastung besteht im wesentlichen aus einem rahmenförmigen Halterungsteil 1, einer Dichtung 2, einer Druckplatte 3, sowie den Zugentlastungs-Bügel 4 und 5. Das Halterungsteil ist an einem Steckverbinder-Gehäuse 6 vorgesehen und ist mit den Schrauben 7 über einer Durchgangs-Öffnung 8 für das einzuführende Flachkabel 9 an diesem befestigt.

In das Halterungsteil 1 ist eine elastische Dichtung 2 eingefügt, wobei die Dichtung am Boden des Halterungsteiles auf hier vorgesehenen Auflageschultern 10 aufliegt, seitlich von den Seitenteilen 11 des Halterungsteiles umgeben ist und das Flachkabel eng umschließt. Über der Dichtung ist die Druckplatte 3 vorgesehen, die mittels der Schrauben 12 mit dem Halterungsteil verschraubt und deren umlaufender, wulstförmiger Rand 13 gegen die Dichtung gepreßt ist.

Das Halterungsteil 1 ist weiterhin mit zwei senkrechten, seitlichen Pfosten 14 versehen, an denen die Zugentlastungs-Bügel 4, 5 befestigt sind. Hierzu ist einer der beiden Bügel mit Gewindebohrungen versehen und die Pfosten und der andere Bügel sind jeweils mit Durchgangsöffnungen für die Schrauben 15 ausgestattet.

Beim Gegeneinanderschrauben der beiden Bügel wird das Flachkabel 9 zwischen diesen eingeklemmt und sicher gehalten. Um eine gute Klemmung zu erzielen, ist der Bügel 4 mit einer quer zum Kabel verlaufenden Rippe 16 und der Bügel 5 mit zwei beanstandeten Rippen 17 versehen. Entsprechende Rundungen an den Rippen verhindern eine Beschädigung des Kabels, wobei auch die nach außen hin — zum abgehenden Kabel hin — weisenden Kanten 18 der Bügel mit Abrundungen versehen sind, um Beschädigungen des Kabels bei dessen Biegung zu verhindern.

Der Zusammenbau der erfindungsgemäßen Kabeleinführung geschieht folgendermaßen:

Zunächst wird das Halterungsteil 1 an das Steckverbinder-Gehäuse 6 geschraubt, wobei auf der Unterseite des Halterungsteiles eine umlaufende Nut 24 vorgesehen sein kann, in die ein Dichtring 19 eingelegt ist, wobei eine Abdichtung des Innenraumes des Gehäuses gegen Fremdkörper und Feuchtigkeit erzielt wird. Anschließend wird die Dichtung 2 in das Halterungsteil eingelegt und das Flachkabel 9 durch die Öffnung 28 der Dichtung geführt. Die zuvor über das Flachkabel geschobene Druckplatte 3 wird sodann mit dem Halterungsteil verschraubt. Dabei drückt der wulstförmige Rand 13 der Druckplatte auf die Dichtung, die nach außen — aufgrund der sie umschließenden Seitenteile 11 des Halterungsteiles — nicht ausweichen kann und somit bestrebt ist nach innen, zum Kabel hin auszuweichen. Dabei wird die Dichtung allseitig fest gegen das Flachkabel gepreßt. Hierbei wird nunmehr an der Kabeleinführungsstelle eine einwandfreie Abdichtung gegen eindringende Fremdkörper bzw. Feuchtigkeit erzielt.

Anschließend werden die Zugentlastungs-Bügel 4, 5 in Position gebracht und gegeneinandergeschraubt. Das zwischen den Bügeln geführte Flachkabel wird dabei fest eingeklemmt und sicher gehalten, wobei die Bügel gleichzeitig fest mit den Pfosten des Halterungsteiles verbunden sind. Mit der somit erstellten Flachkabeleinführung wird zum einen eine einwandfreie Zugentlastung des eingeführten Flachkabels bewirkt und zum anderen eine ausreichende Abdichtung des Gehäuse-Innenraumes gegen eindringende Verunreinigungen wie Staub, Feuchtigkeit etc., erzielt.

Die Verwendung der erfindungsgemäßen Flachkabeleinführung ist an allen ebenen Gehäuse- bzw. Wandflächen möglich. Für weit unterschiedliche Flachkabelabmessungen (Breiten/Dicken) ist vorgesehen, daß mit entsprechend unterschiedlichen Öffnungen (den jeweils verwendeten Kabeln angepaßte) Dichtungen und Druckplatten verwendet werden. Auch kann vorgesehen sein, daß zwei oder ggfs. auch mehrere Flachkabel übereinanderliegend in die Kabeleinführung eingebracht sind, wobei auch hier angepaßte Dichtungen und Druckplatten verwendet werden, wobei gleichfalls eine Abdichtung der Einführungsstelle erreicht wird, indem die Dichtung gegen die äußeren Kabel gepreßt und die Kabel selbst gegeneinander gedrückt werden.

Für Flachkabeleinführungen, bei denen an die Abdichtung des Gehäuseinnenraumes keine besonderen Anforderungen gestellt werden, d.h. wo nur eine Abdichtung gegen grobe Verunreinigungen, nicht dagegen gegen Feuchtigkeit erforderlich ist, kann vorgesehen sein, daß die Druckplatte fortgelassen und die Dichtung so dick bemessen wird, daß sie etwas über die Seitenteile 11 des Halterungsteiles vorsteht. Die Zugentlastungsbügel sind dann jedoch so auszubilden, daß ihre Unterseiten beim Verschrauben mit den Pfosten des Halterungsteiles auf die Dichtung drücken. Hierbei kann die Unterseite der Bügel zusätzlich mit einer leistenförmigen Anformung — ähnlich dem wulstförmigen Rand der Druckplatte — versehen sein.

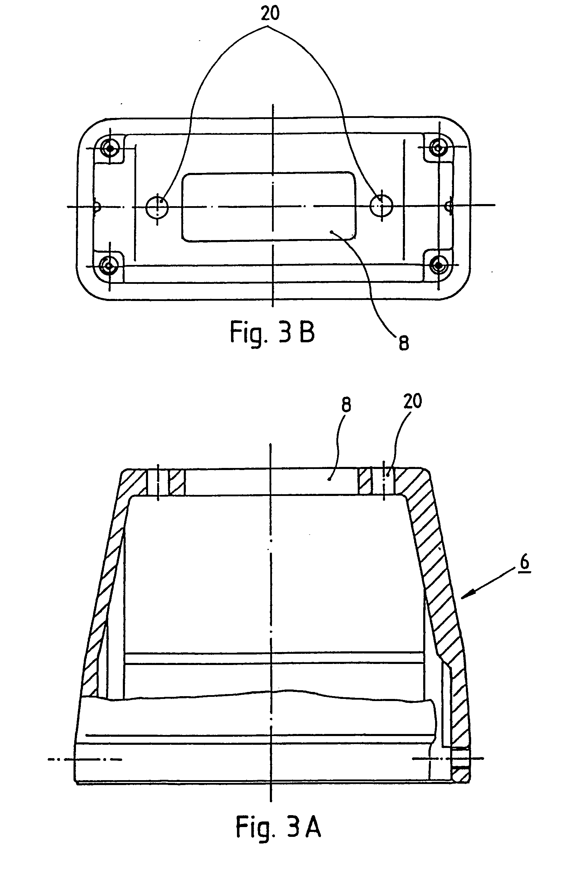

Zum besseren Verständnis der Ausbildung der verschiedenen Elemente der Flachkabeleinführung und deren Zusammenwirken sind diese in den Fig. 3 bis 8 separat dargestellt und werden im folgenden kurz erläutert.

In der Fig. 3 ist das Steckverbinder-Gehäuse 6 dargestellt, das an seiner oberen Seite mit einer rechteckigen Durchgangs-Öffnung 8 für das einzuführende Flachkabel versehen ist. Neben der Öffnung sind Durchgangsbohrungen 20 für die Schraubbefestigung des Halterungsteiles 1 vorgesehen. Im übrigen entspricht das Steckverbinder-Gehäuse einem handelsüblichen, bekannten Gehäuse, in das ein Steckverbinder-Einsatz (hier nicht näher dargestellt), von der Unterseite her einsetzbar ist.

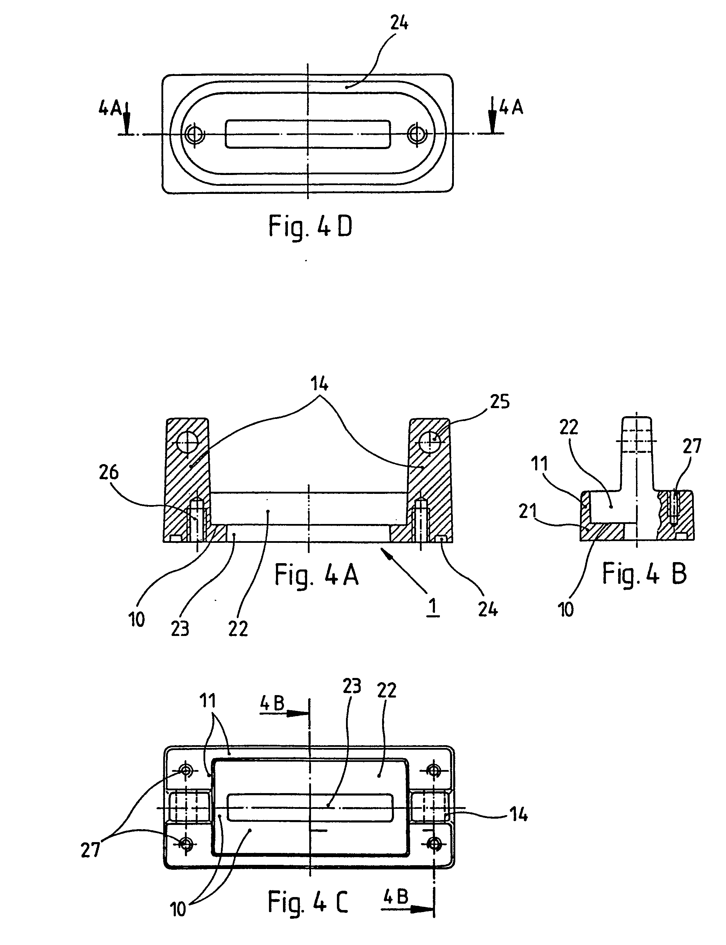

In der Fig. 4 ist das Halterungsteil 1 in verschiedenen Ansichten dargestellt. Das Halterungsteil besteht im wesentlichen aus einem rahmenförmigen Basisteil 21, das an zwei gegenüberliegenden Seiten mit zwei Pfosten 14 versehen ist. Das Basisteil ist dabei mit einer rechteckigen Einformung 22 versehen, wobei die Seitenteile 11 des Halterungsteiles ausgebildet sind. Am Grunde der Einformung ist eine rechteckige Öffnung 23 für das durchzuführende Flachkabel vorgesehen. Diese Öffnung ist kleiner als die lichte Weite der Einformung 22, so daß hier die Auflageschultern 10 für die später einzufügende Dichtung 2 gebildet sind. Auf der Unterseite des Halterungsteiles ist eine umlaufende Nut 24 eingeformt, in die — wie weiter oben beschrieben — ein Dichtring 19 eingelegt werden kann. Die Pfosten 14 sind in ihrem oberen Bereich mit Bohrungen 25 versehen, die zur Befestigung der Zugentlastungs-Bügel 4, 5 dienen.

Gewindebohrungen 26 sind für die Befestigung am Steckverbinder-Gehäuse 6, bzw. einer Wandfläche vorgesehen.

Die in der Oberseite des Halterahmens vorhandenen Gewindebohrungen 27 dienen der Befestigung der Druckplatte 3.

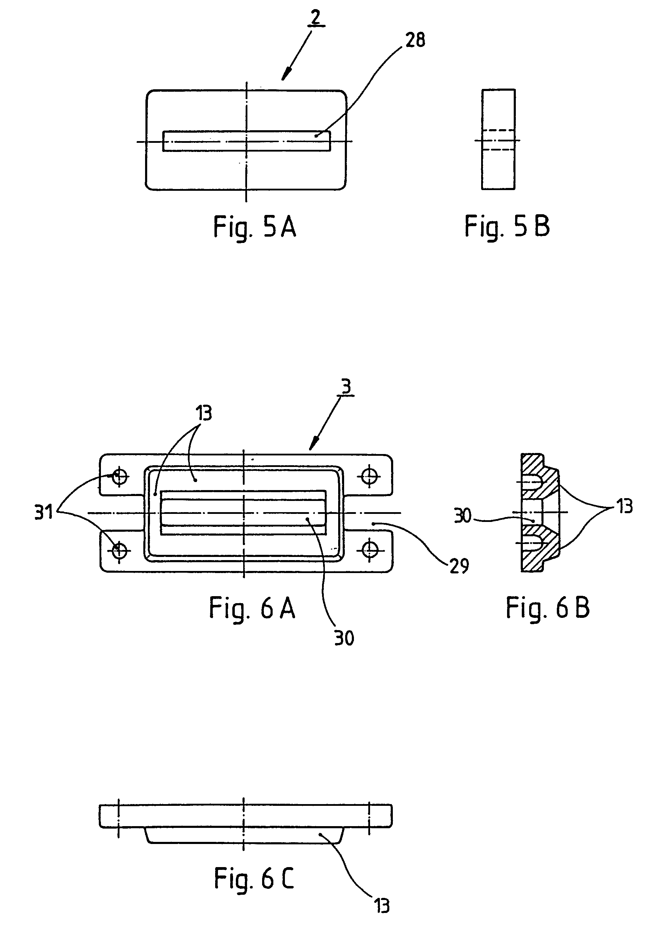

In der Fig. 5 ist die Dichtung 2 abgebildet. Die Dichtung besteht aus elastischem Material, vorzugsweise Moosgummi. Die äußeren Abmessungen sind dabei entsprechend den Abmessungen der Einformung 22 des Halterungsteiles ausgeführt und die Dicke der Dichtung entspricht in etwa der Tiefe dieser Einformung. Zumindest ist die Dichtung so dick auszubilden, daß beim Zusammendrücken durch die Druckplatte genügend Dichtungsmaterial zur Verfügung steht, das in Querrichtung der Dichtung «fließen» kann. Weiterhin ist die Dichtung mit einer zentrischen, rechteckigen Öffnung 28 versehen, deren Weite (Länge/Breite) entsprechend dem verwendeten Flachkabel ausgeführt ist.

Die Fig. 6 zeigt die Ausführung der Druckplatte 3. Die Druckplatte ist im wesentlichen eine ebene, rechteckige, der Form (in bezug auf die äußeren Abmessungen) des Halterungsteiles angepaßte Platte, wobei seitliche Schlitze 29 für die Aufnahme der Pfosten 14 des Halterungsteiles vorgesehen sind. Die Druckplatte ist mit einer — ebenfalls dem einzufügenden Flachkabel angepaßten — rechteckigen Öffnung 30 versehen. Die Öffnung ist von einem umlaufenden, wulstförmigen Rand 13 umgeben, der beim Zusammenfügen der Kabeleinführung auf die Dichtung 2 drückt. Bohrungen 31 sind zum Befestigen mit dem Halterungsteil vorgesehen.

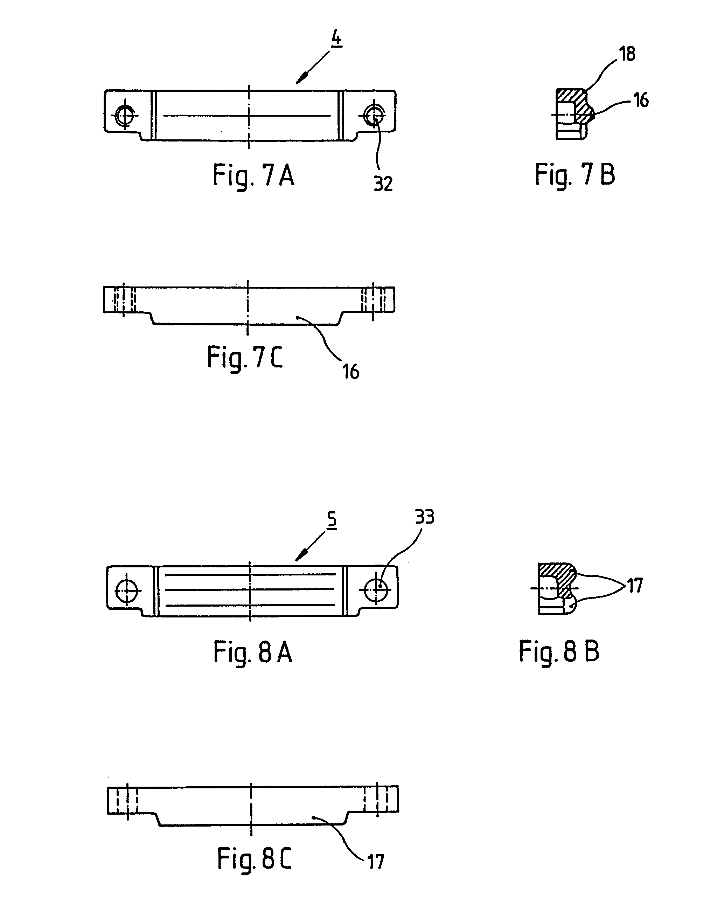

Schließlich zeigen die Fig. 7 und 8 die Ausbildung der Zugentlastungs-Bügel 4 und 5. Wie vorstehend bereits erwähnt, werden diese Bügel unter Zwischenlage des Flachkabels gegeneinandergeschraubt.

Zur Erzielung einer optimalen Klemmung ist der biegesteife Bügel 4 mit einer querlaufenden Rippe 16 versehen, während der gleichfalls biegesteife Bügel 5 mit zwei beabstandeten Rippen 17 versehen ist.

Endseitig sind die Bügel mit Bohrungen 32, 33 zur gegenseitigen Verschraubung unter Einschluß der Pfosten 14 des Halterungsteiles ausgestattet, wobei in einem Bügel Durchgangsbohrungen 33 und in dem anderen Bügel Gewindebohrungen 32 vorgesehen sind.

Die mit dem Kabel in Berührung tretenden Kanten der Rippen und der Bügel selbst sind abgerundet, um Beschädigungen des Kabels zu verhindern.

Selbstverständlich kann auch vorgesehen sein, daß einer der beiden Bügel einstückig mit den Pfosten 14 des Halterungsteiles 1 ausgebildet ist.

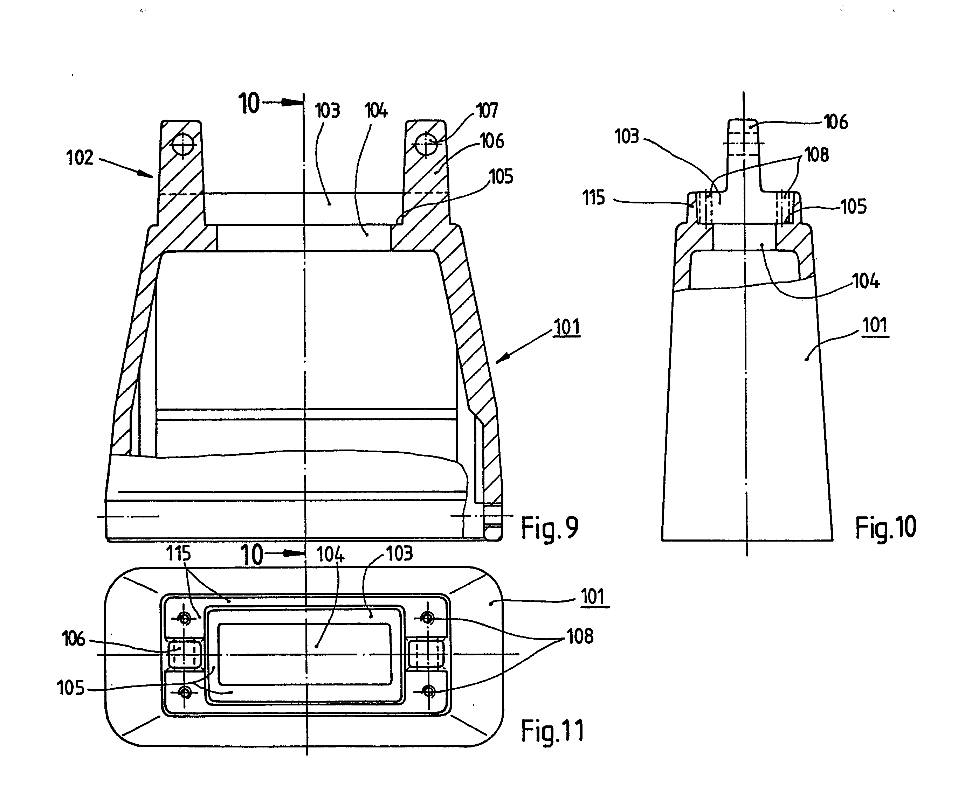

In der Fig. 9 bis 11 ist ein Steckverbinder-Gehäuse 101 in verschiedenen Ansichten dargestellt. An der oberen Seite des Gehäuses ist ein rahmenförmiges Halterungsteil 102 vorgesehen, das einstückig mit dem Gehäuse ausgebildet ist. Das Gehäuse mit dem Halterungsteil besteht aus Metall oder Kunststoffmaterial und ist vorzugsweise durch Spritz-Gieß-Verfahren hergestellt. Im Halterungsteil ist eine im wesentlichen rechteckige Ausnehmung 103 eingeformt in deren Bodenbereich eine rechteckige Durchgangs-Öffnung 104 angeordnet ist, die zum Innenraum des Gehäuses führt. Diese Durchgangsöffnung ist in ihren Abmessungen kleiner als die Ausnehmung 103 ausgeführt, so daß hier randseitige, umlaufende Schultern 105 ausgebildet sind. An zwei gegenüberliegenden Seiten des Halterungsteiles sind senkrechte Pfosten 106 vorgesehen, an denen die weiter unten beschriebenen Zugentlastungs-Bügel befestigbar sind. Hierzu sind entsprechende Bohrungen 107 in den Pfosten vorhanden. Weiterhin sind in dem Halterungsteil Gewinde-Bohrungen 108 vorgesehen, die der Befestigung einer ggfs. vorzusehenden, gleichfalls weiter unten näher beschriebenen Druckplatte dienen. Auf der dem Halterungsteil gegenüberliegenden Gehäuseseite ist ein hier nicht näher dargestellter Steckverbinder-Einsatz in dem Gehäuse montierbar.

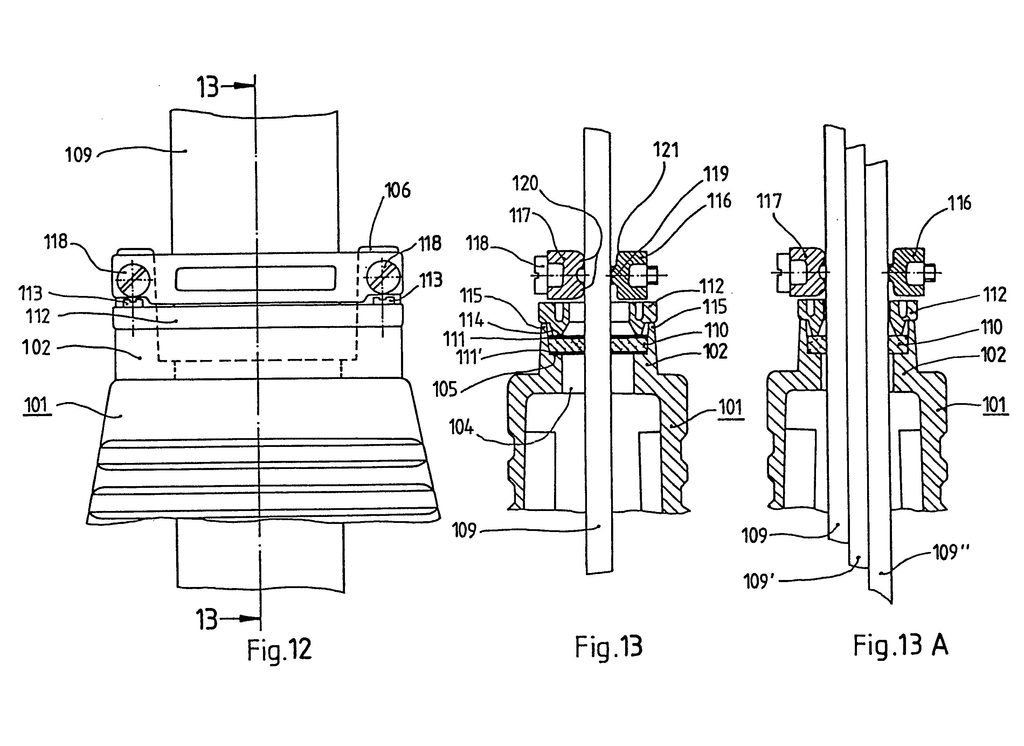

Im folgenden wird auf die Figuren 12 und 13 bezug genommen, in denen dargestellt ist, wie ein Flachkabel 109 in das Gehäuse 101 eingeführt und zugentlastet gehalten ist. In die Ausnehmung 103 des Halterungsteiles 102 ist eine aus elastischem Material, wie z.B. Weichgummi, Moosgummi o.ä. Material, bestehende Dichtung 110 eingelegt. Die Dichtung ist in ihren äußeren Abmessungen entsprechend der Abmessung der Ausnehmung 103 ausgebildet, mit einem der Querschnittsform des Flachkabels entsprechenden, rechteckigen, mittleren Schlitz 122 versehen. Auf der Ober- und Unterseite der Dichtung ist jeweils eine aus biegesteifem Material (z.B. Stahlblech) bestehende Druck-Scheibe 111, 111' angeordnet. Diese Scheiben entsprechen in ihren äußeren Abmessungen der Geometrie der Ausnehmung 103 des Halterungsteiles und sind mit einer zentrischen Öffnung versehen, die der Querschnitts-Abmessung des eingeführten Flachkabels 109 entspricht. Das Flachkabel ist durch den Schlitz 122 der Dichtung, sowie die Öffnung 128 der Scheiben geführt und ragt durch die Durchgangs-Öffnung 104 in das Gehäuseinnere. Eine Druckplatte 112 ist weiterhin über das Kabel geschoben und mittels der Schrauben 113, die in die Bohrungen 108 geschraubt sind, mit dem Halterungsteil verschraubt. Dabei drückt ein umlaufender, wulstförmiger Rand 114 der Druckplatte auf die obere Scheibe 111, wobei die Dichtung zusammengepreßt wird. Durch die die Dichtung seitlich/außen umschließenden Seitenteile 115 des Halterungsteiles kann die Dichtung nicht nach außen ausweichen und ist somit bestrebt nach innen, zum Kabel hin auszuweichen. Dabei wird die Dichtung allseitig fest gegen das Flachkabel gepreßt. Hierbei liegt die untere Scheibe 111' auf den Rändern (Schultern 105) des Halterungsteiles auf und bewirkt, daß die elastische Dichtung nicht durch die vorzugsweise größer (für das Einführen von mehreren parallelen Flachkabeln) bemessene Durchführungsöffnung 104 hindurchgedrückt wird. Insgesamt wird beim derartigen Aufbau der Kabeleinführung eine einwandfreie Abdichtung gegen eindringende Fremdkörper sowie auch Feuchtigkeit erzielt.

Weiterhin sind zwei Zugentlastungsbügel 116, 117 vorgesehen, die unter Zwischenlage des Flachkabels mit den Pfosten 106 des Halterungsteiles verschraubt sind. Hierzu ist einer der beiden Bügel mit Gewindebohrungen versehen und die Pfosten und der andere Bügel sind jeweils mit Durchgangsöffnungen für die Schrauben 118 ausgestattet.

Beim Gegeneinanderschrauben der beiden Bügel wird das Flachkabel zwischen diesen eingeklemmt und sicher gehalten.

Um eine gute Klemmung zu erzielen, ist der Bügel 116 mit einer quer zum Kabel verlaufenden Rippe 119 und der Bügel 117 mit zwei beabstandeten Rippen 120 versehen.

Beim Gegeneinanderschrauben der beiden Bügel weist die Rippe 119 des Bügels 116 dabei mittig zwischen die beiden Rippen 120 des Bügels 117.

Entsprechende Rundungen an den Rippen verhindern eine Beschädigung des Kabels, wobei auch die nach außen hin — zum abgehenden Kabel hin — weisenden Kanten 121 der Bügel mit Abrundungen versehen sind, um Beschädigungen des Kabels bei dessen Biegung zu vermeiden.

Die erfindungsgemäße Flachkabeleinführung soll nicht nur bei Steckverbindergehäusen Verwendung finden, die jeweils für eine bestimmte Kabelabmessung hergestellt sind, und wobei dann entsprechend dem Kabelquerschnitt ausgebildete Durchgangsöffnungen 104 im Halterungsteil sowie unterschiedliche, mit entspr. bemessenen Schlitzen versehene Dichtungen und Druckplatten verwendet werden. Bei einem solchen auf den jeweiligen Kabelquerschnitt angepaßten Gehäuse brauchen dabei allerdings keine Druckscheiben 111, 111' vorgesehen zu werden, da hierbei auch ohne diese Scheiben eine einwandfreie Dichtung erzielt werden kann.

Für eine universelle Verwendung der Steckverbindergehäuse ist vorzugsweise vorgesehen, daß — wie in den Fig. 9 - 13 dargestellt — die Öffnung 104 im Halterungsteil/Gehäuse so groß ausgeführt ist, daß die maximal vorgesehene Anzahl von Flachkabeln aufeinanderliegend eingeführt werden kann. Eine entsprechende Anordnung ist in der Fig. 13A dargestellt, wobei hier die Einführung und Halterung von drei Flachkabeln 109, 109', 109'' gezeigt ist. Bei Verwendung des Gehäuses mit der Flachkabeleinführungs-Öffnung 104 für die maximale Anzahl von Flachkabeln, kann hierbei auf das Einfügen von Druck-Scheiben verzichtet werden, da hier auch ohne diese Scheiben die Dichtung nicht ausweichen kann und eine einwandfreie Abdichtung der Kabeleinführung erzielt wird, wobei die flächig aufeinanderliegenden Kabel fest gegeneinander gepreßt sind. Für eine geringere Anzahl von Kabeln, ggfs. auch für Kabel mit einer geringeren Breite, werden die Druckscheiben 111, 111' wie vorstehend bereits erläutert, eingefügt und auch hierbei wird dann eine einwandfreie Abdichtung erzielt. Der Vorteil bei dieser Ausführungsform liegt dabei in der Verwendung eines einheitlichen Standard-Gehäuses, wobei die Anpassung an die verschiedenen Kabelanzahlen bzw. -Abmessungen durch preiswerte Druckscheiben und Dichtungen mit lediglich unterschiedlichen Öffnungen 128 erfolgt.

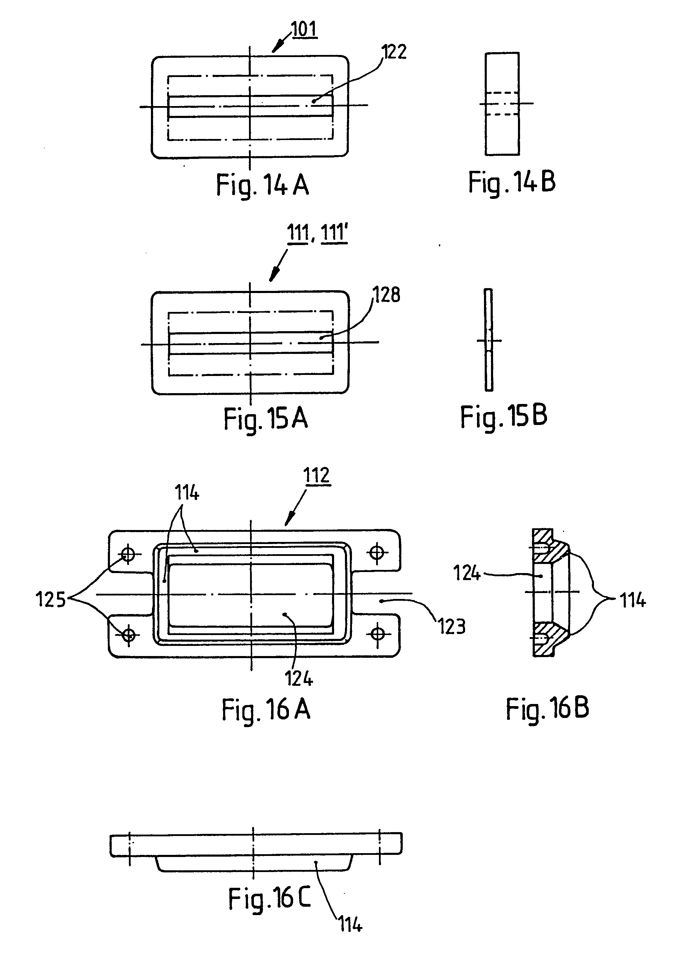

Für Flachkabeleinführungen, bei denen an die Abdichtung des Gehäuseinnenraumes keine besonderen Anforderungen gestellt werden, d.h. wo nur eine Abdichtung gegen grobe Verunreinigungen, nicht dagegen gegen Feuchtigkeit erforderlich ist, kann vorgesehen sein, daß auch die Druckplatte fortgelassen und die Dichtung so dick bemessen wird, daß sie etwas über die Seitenteile 115 des Halterungsteiles vorsteht. Die Zugentlastungsbügel sind dann jedoch so auszubilden, daß ihre Unterseiten beim Verschrauben mit den Pfosten des Halterungsteiles auf die Dichtung drücken. Hierbei kann die Unterseite der Bügel zusätzlich mit einer leistenförmigen Anformung — ähnlich dem wulstförmigen Rand der Druckplatte — versehen sein. Zum besseren Verständnis der Ausbildung der Dichtung 110, der Druck-Scheibe 111, 111' sowie der Druckplatte 112 und deren Zusammenwirken — wobei auch hier Zugentlastungsbügel 116 und 117 in gleicher Ausbildung wie in den Fig. 7 und 8 dargestellt verwendet werden — sind diese Elemente in den Fig. 14 bis 16 separat dargestellt und werden im folgenden kurz erläutert.

In den Fig. 14A, 14B ist die Dichtung 110 abgebildet. Die Dichtung besteht aus elastischem Material, vorzugsweise Weichgummi. Die äußeren Abmessungen sind dabei entsprechend den Abmessungen der Ausnehmung 103 des Halterungsteiles ausgeführt und die Dicke der Dichtung entspricht in etwa der Tiefe dieser Ausnehmung. Zumindest ist die Dichtung so dick auszubilden, daß beim Zusammendrücken durch die Druckplatte genügend Dichtungsmaterial zur Verfügung steht, das in Querrichtung der Dichtung «fließen» kann. Weiterhin ist die Dichtung mit einer zentrischen, rechteckigen Öffnung (Schlitz 122) versehen, deren Weite (Länge/Breite) entsprechend dem verwendeten Flachkabel ausgeführt ist, ggfs. bis hin zu der strichpunktiert angedeuteten Größe.

In den Fig. 15A 15B ist die Ausbildung einer Druckscheibe 111, 111' dargestellt, die im wesentlichen der Form der in den Fig. 14A, 14B gezeigten Dichtung entspricht, jedoch dünner und aus biegesteifem Material hergestellt ist.

Die Fig. 16A, 16B, 16C zeigen die Ausführung der Druckplatte 112. Die Druckplatte ist im wesentlichen eine ebene, rechteckige, der Form (in bezug auf die äußeren Abmessungen) des Halterungsteiles angepaßte Platte, wobei seitliche Schlitze 123 für die Aufnahme der Pfosten 106 des Halterungsteiles vorgesehen sind. Die Druckplatte ist mit einer — ebenfalls dem einzufügenden Flachkabel angepaßten — rechteckigen Öffnung 124 versehen. Die Öffnung ist von einem umlaufenden, wulstförmigen Rand 114 umgeben, der beim Zusammenfügen der Kabeleinführung auf die Dichtung 110 bzw. Scheibe 111 drückt. Bohrungen 125 sind zum Befestigen mit dem Halterungsteil vorgesehen.

Wie bereits weiter oben erwähnt, werden auch bei dieser Ausführungsform Zugentlastungsbügel verwendet, die entsprechend denen des ersten Ausführungsbeispieles — wie zu den Fig. 7 und 8 beschrieben — ausgebildet und angeordnet sind.

## Patentansprüche

1. Vorrichtung zur Einführung eines Flachkabels (9, 109) für Wanddurchbrüche, Gehäusewände etc., insbesondere für Steckverbinder-Gehäuse, wobei das Flachkabel durch Befestigungs- bzw. Halterungsteile (1, 102) gefädelt ist, die mit dem Kabelquerschnitt entsprechenden Durchgangsöffnungen (8, 28, 122) versehen sind und wobei eine elastische Dichtung (2, 110) zwischen den Befestigungsteilen vorgesehen ist, die beim Verschrauben dieser Teile gegen das Flachkabel gedrückt ist, dadurch gekennzeichnet, daß ein rahmenförmiges, im wesentlichen rechteckförmiges Halterungsteil (1, 102) vorgesehen ist, das an zwei gegenüberliegenden Seiten mit Pfosten (14, 106) versehen ist, daß im Bodenbereich des Halterungsteiles eine Öffnung als Kabeldurchgang (23, 104) vorgesehen ist, daß im Halterungsteil (1, 102) eine Einformung (22, 103) mit randseitigen Auflageschultern (10, 105) für eine einfügbare, elastische Dichtung (2, 110) ausgebildet ist, wobei die Dichtung mit einer, der Querschnittsform des Flachkabels (9, 109) entsprechenden Durchgangsöffnung versehen ist, und daß Zugentlastungsbügel (4, 5; 116, 117) mit den Pfosten (14, 106) des Halterungsteiles verschraubbar sind, wobei das Flachkabel (9, 109) zwischen den Zugentlastungsbügeln klemmend gehalten ist.

2. Vorrichtung nach Anspruch 1, dadurch gekennzeichnet, daß das Halterungsteil (1) an der Wand- bzw. Gehäusefläche, mit seinem Kabeldurchgang (23) fluchtend zu einer darin vorgesehenen Öffnung (8), lösbar befestigt ist.

3. Vorrichtung nach Anspruch 2, dadurch gekennzeichnet, daß das Halterungsteil (1) an seiner zur Wand- bzw. Gehäusefläche weisenden Unterseite mit einer umlaufenden Nut (24) versehen ist, in die ein Dichtring (19) einlegbar ist.

4. Vorrichtung nach Anspruch 1, dadurch gekennzeichnet, daß das Halterungsteil (102) mit seinem Kabeldurchgang (104) einstückig an einem Steckverbinder-Gehäuse (101) angeformt ist.

5. Vorrichtung nach einem der Ansprüche 1 - 4, dadurch gekennzeichnet, daß einer der Zugentlastungsbügel (4, 5; 116, 117) einstückig mit den Pfosten (14, 106) des Halterungsteiles (1, 102) ausgebildet ist.

6. Vorrichtung nach einem der Ansprüche 1 - 5, dadurch gekennzeichnet, daß der eine der Zugentlastungs-Bügel (4, 116) mit einer in Längsrichtung (quer zum Kabel) verlaufenden balligen Rippe (16, 119) versehen ist, und daß der andere Zugentlastungs-Bügel (5, 117) mit zwei beabstandeten balligen Rippen (17, 120) versehen ist, wobei beim Gegeneinanderschrauben der Zugentlastungs-Bügel die Rippe des einen Bügels mittig zwischen die beiden Rippen des anderen Bügels weist.

7. Vorrichtung nach einem der Ansprüche 1 - 6, dadurch gekennzeichnet, daß eine Druckplatte (3, 112) mit einer mittigen Kabel-Durchführungs-Öffnung (30, 124), mit einem die Öffnung umgebenden (umlaufenden), zur Dichtung (2, 110) hinweisenden, wulstförmigen Rand (13, 114) versehen und mit dem Halterungsteil (1, 102) verschraubbar ist.

8. Vorrichtung nach einem der Ansprüche 1 - 7, dadurch gekennzeichnet, daß der Kabeldurchgang im Halterungsteil entsprechend der Querschnittsform des/der einzuführenden Flachkabel (9; 9, 9'; 9, 9', 9''; bzw. 109; 109, 109'; 109, 109', 109'') ausgebildet ist, und daß die Dichtung (2, 110) jeweils mit einer gleichgroß bemessenen Durchgangs-Öffnung (28, 122) versehen ist.

9. Vorrichtung nach einem der Ansprüche 1 - 7, dadurch gekennzeichnet, daß der Kabeldurchgang im Halterungsteil entsprechend der Querschnittsform einer maximalen Anzahl von einzuführenden Flachkabeln (9, 9', 9'' bzw. 109, 109', 109'') ausgebildet ist, daß die einfügbare Dichtung (2, 110) jeweils mit einer dem/den verwendeten Flachkabel(n) entsprechend bemessenen Durchgangs-Öffnung (28, 122) versehen ist, und daß auf der Ober- bzw. Unterseite der Dichtung je eine mit einer der Weite der Öffnung (28, 122) der Dichtung entsprechenden Öffnung versehene, biegesteife Druck-Scheibe (111, 111') angeordnet ist.

## Claims

1. Device for leading a flat cable (9; 109) into wall penetrations, enclosure walls, etc., and especially for pin-and-socket connector housings, the flat cable being threaded through securing pieces or, rather, holding pieces (1; 102) which are provided with through-openings (8, 28, 122) that match the cable cross-section, a resilient seal (2; 110) being provided between the securing pieces and pressed against the flat cable when these pieces are fastened together by screws, characterized in that a frame-shaped, substantially rectangular holding piece (1; 102) is provided, which is provided with posts (14; 106) on two opposite sides, in that an opening is provided in the bottom region of the holding piece, as a cable passage (23; 104), in that a recess (22; 103) is moulded within the holding piece (1; 102), said recess having supporting side shoulders (10; 105) for an insertable resilient seal (2; 110) which is provided with a through-opening that matches the cross-sectional shape of the flat cable (9; 109), and in that pull-relief clips (4, 5; 116, 117) can be fastened to the posts (14; 106) of the holding piece by screws, the flat cable (9; 109) being gripped between said clips.

2. Device according to Claim 1, characterized in that the holding piece (1) is fastened to the wall or housing surface with its cable passage (23) in alignment with an opening (8) provided in said wall or housing surface, fastening being effected by means allowing detachment.

3. Device according to Claim 2, characterized in that the holding piece (1) is provided with an endless groove (24) on its undersurface, which faces the wall or housing surface, and a sealing ring (19) can be inserted into said groove.

4. Device according to Claim 1, characterized in that the holding piece (102), with its cable passage (104), is integrally moulded on a pin-and-socket connector housing 101.

5. Device according to any one of Claims 1 to 4, characterized in that one of the pull-relief clips (4, 5; 116, 117) is formed integrally with the posts (14; 106) of the holding piece (1; 102).

6. Device according to any one of Claims 1 to 5, characterized in that one of the pull-relief clips, namely the clip (4; 116), is provided with a radiused-off rib (16; 119) which runs lengthwise (transversely to the cable), and in that the other pull-relief clip (5; 117) is provided with two radiused-off ribs (17; 120) which are spaced one from the other, the rib of one of the clips pointing centrally between the two ribs of the other clip when these pull-relief clips are fastened together by screws.

7. Device according to any one of Claims 1 to 6, characterized in that a pressure plate (3; 112) can be fastened to the holding piece (1; 102) by screws, said pressure plate being provided with a central cable lead-through opening (30; 124) which is surrounded by an endless bead-shaped rim (13; 114) which points towards the seal (2; 110).

8. Device according to any one of Claims 1 to 7, characterized in that the cable passage in the holding piece is designed to match the cross-sectional shape of the flat cable or cables to be led in (9; 9, 9'; 9, 9', 9'' or else 109; 109, 109'; 109, 109', 109''), and in that the seal (2; 110) is in each case provided with a through-opening (28; 122) which is designed to be of the same size.

9. Device according to any one of Claims 1 to 7, characterized in that the cable passage in the holding piece is designed to match the cross-sectional shape of a maximum number of flat cables that may be led in (9, 9', 9'' or else 109, 109', 109''), in that the insertable seal (2; 110) is in each case provided with a through-opening (28; 122), its size being designed to match the flat cable or cables that are used, and in that one of two flexurally stiff pressure washers (111, 111') is in each case placed beneath the seal and the other is placed on top of it, these washers being provided with an opening that matches the size of the opening (28; 122) in the seal.

## Revendications

1. Dispositif pour l'introduction d'un câble plat (9, 109) pour perçages dans des parois, parois de boîtier etc., notamment pour boîtier de connecteur, le câble plat étant enfilé à travers des éléments de maintien ou de fixation (1, 102) qui sont pourvus d'ouvertures de passage (8, 28, 122) correspondants à la section transversale du câble, .une étanchéité élastique (2, 110) étant prévue entre les éléments de fixation qui, lors du vissage de ces éléments, sont pressés contre le câble plat, caractérisé en ce qu'un élément de fixation (1, 102), substantiellement rectangulaire à la manière d'un cadre, est prévu, qui présente sur deux côtés opposés des montants (14, 106), que dans la zone du fond de l'élément de fixation une ouverture pour le passage du câble (23, 104) est prévue, que l'élément de fixation (1, 102) comporte une moulure (22, 103) avec des épaulements d'appui (10, 105) côté bord pour une étanchéité élastique (2, 110) qui peut être insérée, l'étanchéité étant pourvue d'une ouverture de passage correspondant à la forme de la section transversale du câble plat (9, 109) et que des étriers anti-traction (4, 5; 116, 117) peuvent être vissés aux montants (14, 106) de l'élément de fixation, le câble plat (9, 109) étant tenu serré entre les étriers anti-traction.

2. Dispositif selon la revendication 1, caractérisé en ce que l'élément de fixation (1) est fixé, de manière à pouvoir être détaché, à la surface de la paroi ou du boîtier de sorte ce que son passage de câble (23) soit aligné sur l'ouverture (8) qui est prévue dans ladite surface de paroi ou de boîtier.

3. Dispositif selon la revendication 2, caractérisé en ce que l'élément de fixation (1) est pourvu, sur sa face inférieure dirigée vers la surface de paroi ou de boîtier, d'une rainure (24) sur tout le pourtour, dans laquelle un anneau d'étanchéité (19) peut être logé.

4. Dispositif selon la revendication 1, caractérisé en ce que l'élément de fixation (102) est formé avec son passage de câble (104) d'un tenant sur un boîtier de connecteur (101).

5. Dispositif selon l'une des revendications 1 - 4, caractérisé en ce que l'un des étriers anti-traction (4, 5; 116, 117) est formé d'un tenant avec les montants (14, 106) de l'élément de fixation (1, 102).

6. Dispositif selon l'une des revendications 1 - 5, caractérisé en ce que l'un des étriers anti-traction (4, 116) est pourvu en sens longitudinal (transversalement par rapport au câble) d'une nervure bombée (16, 119) et que l'autre étrier anti-traction (5, 117) est pourvu de deux nervures bombées espacées (17, 120), la nervure de l'un des étriers se logeant entre les nervures de l'autre étrier lorsque les étriers anti-traction sont vissés l'un contre l'autre.

7. Dispositif selon l'une des revendications 1 - 6, caractérisé en ce qu'une plaque de pression (3, 112) est pourvue d'une ouverture de passage du câble (30, 124), d'un bord formé comme un bourrelet (13, 114) entourant l'ouverture (sur tout le pourtour) dirigé vers l'étanchéité (2, 110) et peut être vissée avec l'élément de fixation (1, 102).

8. Dispositif selon l'une des revendications 1 - 7, caractérisé en ce que le passage de câble est formé en correspondance avec la forme de la section transversale du/des câble(s) plat(s) à insérer (9; 9, 9'; 9, 9', 9'' - 109; 109, 109'; 109, 109', 109'') et que l'étanchéité (2, 110) est pourvue d'une ouverture de passage (28, 122) de dimensions identiques.

9. Dispositif selon l'une des revendications 1 - 7, caractérisé en ce que le passage de câble est formé en correspondance avec la forme de la section transversale d'un nombre maximum de câbles plats à insérer (9, 9', 9'' - 109, 109', 109''), que l'étanchéité (2, 110), pouvant être insérée, est pourvue d'une ouverture de passage (28, 122) correspondante dans ses dimensions au(x) câble(s) utilisé(s) et que sur le côté supérieur ou inférieur de l'étanchéité est disposée une rondelle de pression (111, 111') résistant à la flexion et pourvue d'une ouverture correspondante aux dimensions de l'ouverture (28, 122).

Fig. 2

Fig. 1

20

Fig. 3 B

8

8    20

6

Fig. 3 A

24

4A ↓ 4A

## Fig. 4 D

14

25

26

## Fig. 4 A

10  23  22  1  24

22  27

11

21

10

## Fig. 4 B

11  4B  23  22

27

14

10  4B

## Fig. 4 C

Fig. 5 A

Fig. 5 B

Fig. 6 A

Fig. 6 B

Fig. 6 C

Fig. 7 A

Fig. 7 B

Fig. 7 C

Fig. 8 A

Fig. 8 B

Fig. 8 C

Fig.10

Fig. 9

Fig.11

Fig.13 A

Fig.13

Fig.12

Fig. 14 A

Fig. 14 B

Fig. 15 A

Fig. 15 B

Fig. 16 A

Fig. 16 B

Fig. 16 C